# EUROPÄISCHE PATENTSCHRIFT

(11) **EP 2 408 853 B1**
(45) Veröffentlichungstag und Bekanntmachung des Hinweises auf die Patenterteilung: **25.06.2014**
(21) Anmeldenummer: 10711999.2
(22) Anmeldetag: 17.03.2010
(51) Int. Cl.: C08K 3/00, C08J 3/00

(54) **VERFAHREN ZUR HERSTELLUNG VON POLYMERFESTSTOFFEN**
METHOD FOR PRODUCING POLYMERIC SOLIDS
PROCÉDÉ DE PRÉPARATION DE MATIÈRES SOLIDES POLYMÈRES

(30) Priorität: 17.03.2009 EP 09003792
(43) Veröffentlichungstag der Anmeldung: 25.01.2012
(73) Patentinhaber: LANXESS Deutschland GmbH, 50569 Köln (DE)
(72) Erfinder: ACHTEN, Dirk, 51375 Leverkusen (DE); KUEKER, Peter, 50181 Bedburg-Kaster (DE); KEMPKES, Jürgen, 51069 Köln (DE); LORENZ, Bianka, 41539 Dormagen (DE); STOBRAWE, Annika, 41540 Dormagen (DE); OBRECHT, Werner, 47477 Moers (DE)
(86) Internationale Anmeldenummer: PCT/EP2010/001658
(87) Internationale Veröffentlichungsnummer: WO 2010/105805

(56) Entgegenhaltungen:
- EP-A- 1 837 366
- EP-A- 2 025 732
- WO-A-2006/039568
- GB-A- 2 432 584
- US-A1- 2002 002 217

## Beschreibung

Die Erfindung betrifft ein Verfahren zur Herstellung hilfsemulgatorfreier Polymer-Feststoffe.

Die Polychloroprenherstellung ist seit langem bekannt. Sie erfolgt durch Emulsionspolymerisation im alkalischen wässrigen Medium wie z.B. beschrieben in "Ullmanns Encyclopädie der technischen Chemie", Band 9, S. 366, Verlag Urban. Darauf aufbauend gibt es eine Vielzahl von Veröffentlichungen zum Stand der Technik zur Veränderung der Zusammensetzung der Polymere, wie zum Beispiel (Block)-Copolymerisation, Funktionalisierungen sowie polymeranaloge Reaktionen wie Hydrolyse und Grafting sowie zur Herstellung von Blends in festem oder in Latexformen sowie Abmischung mit anderen Produkten wie Füllstoffen, Stabilisatoren, Weichmachern, Aufrahmungs- und Vernetzungsmitteln.

Die kontinuierliche Emulsions-Polymerisation von Chloropren ist aus der DE 3 002 711 bekannt.

Im Anschluss an die Polymerisation werden die so erhaltenen anionisch-stabilisierten Polymerdispersionen (der Begriff Dispersion wird im Folgenden mit Latex oder Polymerlatex gleichgesetzt) zur Herstellung von Feststoffen einer Koagulation unterworfen.

Es ist weiterhin Stand der Technik, dass Polymerdispersionen, die durch Harz- oder Fettsäuren stabilisiert sind, nicht über einen weiten pH-Bereich stabil sind, weil die als Haupt-Emulgatoren verwendeten Harzsäuresalze und/oder Fettsäuren als Emulgatoren durch Überführung in ihre Säureform nicht mehr als aktive Emulgatoren zur Verfügung stehen.

Insgesamt zeigen Polymerdispersionen auf Basis von Harz- und Fettsäuren bei einem pH-Wert < 10 eine verminderte Lager-, Temperatur-, Scher -und Transportstabilität.

Um die Polymerdispersionen über einen weiten pH-Bereich zu stabilisieren, ist der Einsatz von Hilfsemulgatoren erforderlich. Nachteil hierbei ist die zu bestimmende Menge an Hilfsemulgatoren. Zwar sind die Polymerdispersionen mit erhöhter Menge an Hilfsemulgatoren bei der pH-Reduzierung stabil; jedoch sind dann die Polymerfeststoffe gefrier-auftau-stabil, was nicht wünschenswert ist.

Das technisch gebräuchliche Verfahren der Gefrierkoagulation verwendet eine wasserlösliche organische oder anorganische Säure in erheblicher wässriger Verdünnung zwecks pH-Reduzierung auf einen pH-Wert < 9. Damit der Latex nicht bei diesem pH-Wert ausfällt, muss kleine Menge an Hilfsemulgatoren anwesend sein. Die so erhaltenen destabilisierten Produkte werden üblicherweise an einer Gefrierkoagulationswalze kontinuierlich abgeschieden und von dieser kontinuierlich als Folie abgeschabt, im Anschluss aufwendig gewaschen, um überschüssige Salze und Säuren zu entfernen, und abschließend in einem vertikalen oder horizontalen Ofen getrocknet. Der gesamte Aufarbeitungsprozess läuft dabei nach einem kontinuierlichen Verfahren ab.

Allen diesen Verfahren des Standes der Technik ist gemein, dass entweder aufwendige und stark wasserverbrauchende Verfahren zur Entfernung von Hilfsemulgatoren, Salzen und organischen Säuren aus dem Fällungsprozess angewendet werden müssen oder dass das erhaltene Produkt eine oft minderwertiger Qualität aufweist, z.B. eine erhöhte Wasserquellung, erhöhte VOC-Konzentration, schlechtere Alterungsstabilität, höhere Farbzahlen oder von der Norm abweichende Vulkanisationsverhalten, da das Produkt mit der verbleibenden Salz und Säurefracht behaftet ist. Weiterer Nachteil bei der pH-Reduzierung ist eine Verdünnung und unkontrollierte Fällung der in diesem Zustand extrem klebrigen Produkte, mit der daraus resultierenden Notwendigkeit häufiger und aufwendiger Reinigungszyklen der Fällanlagen.

Polychloropren wird entweder nach entsprechender Compoundierung und Vulkanisation zur Herstellung von technischen Gummiartikeln verwendet oder es wird als (Kontakt-)klebstoffrohstoff eingesetzt.

Aufgabe war es also, ein Verfahren zu entwickeln, das die oben genannten Nachteile weitestgehend nicht aufweist, sowie ein Produkt mit nach obigen Kriterien verbesserter Qualität bereitzustellen.

Gegenstand der vorliegenden Anmeldung ist somit ein Verfahren zur Herstellung von hilfsemulgatorfreien Polymerfeststoffen ausgehend von Polymerlatices, wobei die Polymerdispersion mit einem Ausgangs-pH-Wert größer 9 durch Zugabe von gasförmigem Kohlendioxid auf einen pH-Wert von 6 bis 9 eingestellt wird und die Polymerdispersion im Anschluss durch Scherung und/oder Ausfrieren koaguliert wird.

Die Begriffe Polymerlatex, Polymerdispersion, Latex, Dispersion und Chloroprenlatex werden als Synonyme verwendet.

Überraschenderweise wurde nun gefunden, dass Polymerlatices, die mit einem pH > 9 produziert werden, sich vorteilhaft mittels Zugabe von gasförmigem Kohlendioxid auf einen pH-Wert, je nach Aufarbeitungsmethode, von 6-9 einstellen lassen.

Üblicherweise wird die Polymerisation von Chloropren bzw. die Copolymerisation von Chloropren mit geeigneten Comonomeren (inkl. Schwefel) als Emulsionspolymerisation durchgeführt. Hierfür setzt man Emulgatormischungen ein. Übliche Emulgatormischungen bestehen aus Harzsäuren mit Hilfsemulgatoren oder Mischungen von Fettsäuren mit Hilfsemulgatoren oder Harzsäure/Fettsäuregemische mit Hilfsemulgatoren.

Als Harzsäuren können modifizierte oder unmodifizierte (native) Harzsäuren eingesetzt werden. Modifizierte Harzsäuren werden durch Dimerisierung, Disproportionierung, Hydrierung und Modifikation von Harzsäuregemischen erhalten, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Fettsäuren enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Bauinwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Bevorzugt sind die Li- Na-, K- und Ammoniumsalze von nativer bzw. disproportionierter Abietinsäure und von teilhydrierter Talgfettsäure sowie von Mischungen derselben.

Die modifizierten Harzsäuren, Fettsäuren oder Mischungen von Harz/Fettsäure werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Hilfsemulgatoren sind Sulfonate, Sulfate und Phosphate, die an einen organischen Rest gebunden sind. Als organischer Rest kommen aliphatische, aromatische, alkylierte Aromaten, kondensierte Aromaten, sowie methylenverbrückte Aromaten infrage, wobei die methylenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 und 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsulfonatgemische mit 12 bis 18 C-Atomen, Na-Alkylarylsulfonate, Na-Diisobutylennaphthalinsulfonat, methlyenverbückte Polynaphthalin-sulfonatgemische sowie methylenverbrückte Arylsulfonatgemische.

Hilfsemulgatoren sind ferner Additionsprodukte von Ethylenoxid, Propylenoxid sowie von Ethylenoxid/Propylenoxid-Mischungen an Verbindungen mit hinreichend acidem Wasserstoff. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten.

Es wurde überraschend festgestellt, dass Polymerdispersionen, welche durch Emulsionspolymerisation von Chloropren und von Chloroprengemischen mit geeigneten Comonomeren ohne den Einsatz von o. g. Hilfsemulgatoren hergestellt werden, durch das erfindungsgemäße Verfahren auf einen pH-Wert zwischen 6 - 9 gebracht und anschließend beispielsweise durch Ausfrieren koaguliert werden können.

Vorzugsweise liegt die pH-Wert-Einstellung zwischen 7 und 8.

Üblicherweise weisen die Polymerlatices eine Feststoffkonzentration zwischen 20 - 40 Gew.-% bezogen auf 100 Gew.-% eingesetztes Chloropren auf.

Bevorzugte Polymerlatices sind anionisch-stabilisierte Polychloroprendispersionen mit einem Anteil an polymerisiertem Chloropren am Feststoff der Gesamtdispersion von > 50%.

Bevorzugt wird die Polymer-Dispersion mittels einer kontinuierlichen Polymerisation ohne Zusatz von Hilfsemulgatoren hergestellt.

Dadurch lassen sich die erfindungsgemäß hergestellten Polymerlatices unter Einsparung von > 10 %, bevorzugt > 20 %, besonders bevorzugt > 30% des sonst benötigten Waschwassers ohne Qualitätseinbußen zu Feststoffen aufarbeiten.

Die erfindungsgemäß hergestellten Polymerlatices zeigen eine um > 5 %, bevorzugt >15 %, besonders bevorzugt > 30% geringere Neigung zur Verschmutzung im Aufarbeitungsprozess gegenüber herkömmlichen Neutralisationsverfahren.

Durch die Verwendung von Kohlendioxid als Destabilisierungsmittel können um > 2 %, bevorzugt > 5 %, besonders bevorzugt > 10 % höhere Feststoffkonzentrationen in der Polymerdispersion als aktuell üblich, unter Beibehaltung geringerer Verschmutzungstendenz und niedrigerem Waschwasserbedarf aufgearbeitet werden, wodurch Produktionseffizienzsteigerungen um > 5 %, bevorzugt > 10 %, besonders bevorzugt > 15% in der Raum-Zeit-Ausbeute von Feststoff möglich sind.

Durch den Bedarf geringerer Mengen an Waschwasser wird automatisch der Wassergehalt der ausgefrorenen Polymerfilme im Gefrierkoagulationsverfahren verringert, wodurch die notwendige eingesetzte Energie für den Trocknungsprozess der, > 40 % Wasser enthaltenden Filme pro kg Festprodukt, um > 5 %, bevorzugt > 10 %, besonders bevorzugt 15 % reduziert wird.

Durch Reduktion der notwendigen Energie zur Trocknung der Produkte zeigen diese eine geringere Verfärbung im Vergleich zu herkömmlich hergestellten Produkten, alternativ kann bei gleichem Energieeintrag die Bandgeschwindigkeit im Trocknungsofen erhöht werden.

Durch Einsatz geringerer Energiemengen wird die Bildung von sogenannten Teerflecken aus Harzkondensation und Oxidation bei der Trocknung im Trockner reduziert, wodurch sich sowohl die Farbqualität des Endproduktes verbessert, welche typischerweise durch Abtropfen der kondensierten Teerflecken auf das Endprodukt beeinträchtigt wird, als auch die Notwendigkeit zur aufwendigen und teuren Trocknerreinigung reduziert wird.

Zur pH-Einstellung werden aus dem Stand der Technik bekannte Säuren, wie etwa Essigsäure, Phosphorsäure und Schwefelsäure, in verdünnter wässriger Lösung eingesetzt, so dass der Wasser-Verbrauch bei Einsatz dieser Säuren höher ist als bei dem Einsatz von Kohlendioxid.

Die Menge benötigter Säure bei Einsatz von Kohlensäure mittels Eintrag von gasförmigem Kohlendioxid in die wässrige Dispersion ist deutlich geringer als bei allen für diesen Prozess beschriebenen organischen und anorganischen Säuren. Zusätzlich ist die Wasserlöslichkeit der Produkte und Flüchtigkeit der nicht umgesetzten Säure deutlich höher.

Kohlendioxid kann als Gas in bis zu 100 %iger Form eingetragen werden, wodurch eine Verdünnung der Polymerdispersion vermieden wird. Weiterhin erfolgt die pH-Wert-Einstellung präziser und gleichmäßiger in der gesamten Polymerdispersion und lokale Überkonzentrationen, die zu frühzeitiger Koagulatbildung und Verschmutzung fiihren, werden weitgehend vermieden.

Der Einsatz von gasförmigen Kohlendioxid ist weiterhin vorteilhaft, weil weder organische Säuren mit der Gefahr eines VOC und Geruchspotentials, wie die hauptsächlich für diesen Zweck eingesetzte Essigsäure, noch anorganische Säuren mit extremem Verdünnungsbedarf (z.B. HCl, HNO₃, H₂SO₄, H₃PO₄) benötigt werden.

Die Rückstände der Neutralisation mit Kohlendioxid sind deren Natrium- und KaliumSalze, welche eine hervorragende Wasserlöslichkeit, sowie in den extrem geringen Einsatzmengen von 0,5 g bis 15 g CO₂, bevorzugt 2 bis 12 g CO₂, besonders bevorzugt 4 bis 10 g CO₂/kg Polymerfeststoff zum größten Teil ausgewaschen werden und keinen negativen Einfluss in Rückstandsmengen von < 5 g, bevorzugt <2 g, besonders bevorzugt <1 g, als Natrium- und Kaliumcarbonate/kg Feststoff auf die Produkteigenschaften auch bei reduzierter Waschwassermenge ausüben.

Bei der üblichen Aufarbeitung durch Ausfrieren werden die oberflächenaktiven Hilfsemulgatoren teilweise aus dem Polymer entfernt und gelangen in das Abwasser. Sind die Emulgatoren biologisch nicht abbaubar, müssen kostenintensive Verfahren verwendet werden, um das Wasser wieder aufzubereiten.

Zum einen sind die üblicherweise als Hilfsemulgatoren eingesetzten Produkte biologisch nicht abbaubar, zum anderen bewirken sie eine gewisse Verfärbung des Polymeren, wodurch seine Verwendung als Klebstoff für helle Werkstoffe unattraktiv wird.

Durch das erfindungsgemäße Verfahren ist der Einsatz von Hilfsemulgatoren nicht mehr erforderlich, so dass das Abwasser weniger verunreinigt wird. Der Polymerfeststoff weist deutlich geringere Verfärbungen auf.

Mittels Kohlendioxid können vorteilhaft sowohl Polychloroprendispersionen für den Ausfrierprozess destabilisiert werden, als auch Dispersionen koaguliert sowie unter Scherung gefällt werden, um sie einer Entwässerungsschnecke zuzuführen.

Es wurde überraschend festgestellt, dass das nach der Koagulation ausgeschiedene Abwasser weniger Verunreinigungen aufweist. Der CSB-Wert ist signifikant niedriger als bei herkömmlichem Verfahren zur Herstellung von Polymerfeststoffen unter der Verwendung von Essigsäuren zur pH-Wert-Einstellung auf 6 bis 9.

Der CSB-Wert ist ein Maß für die Menge der nach der Gefrierkoagulation im Latexserum enthaltenen niedermolekularen Bestandteile, insbesondere der bei der Polymerisation und in nachfolgenden Prozessschritten eingesetzten Hilfsmitteln z.B. Hilfsemulgatoren und Essigsäure. Je höher bei Koagulationsversuchen, bei denen man von Latices mit denselben Feststoffgehalten ausgeht, der CSB-Wert des Latexserums (Abwasser) ist, desto höher ist der Gehalt an Verunreinigungen im Latexserum (Abwasser).

Des Weiteren kann Kohlendioxid genutzt werden, um in einem Sprühtrocknungsverfahren Polychloroprenpulver kostengünstig und effizient herzustellen, wobei das Kohlendioxid nicht nur in den Strom der Polymerdispersion mit eingegast wird, sondern im Bedarfsfall auch zusätzlich die Atmosphäre im Sprühturm stellen kann.

Vorteilhaft beim Einsatz von Kohlendioxid ist darüber hinaus, dass dieses aus Kohlendioxid neutralen Quellen bezogen wird und durch Einsatz zum Teil in eine gebundene Form überführt wird, womit eine positive Kohlendioxid-Bilanz erhalten wird.

Überschüssiges Kohlendioxid kann in dem erfindungsgemäßen Verfahren aus dem Produkt ausgasen. Aufgrund der geringen Einsatzmengen und Nichtbrennbarkeit des Kohlendioxids besteht keine Gefahr für Umwelt und Produktionsmannschaft.

Im erfindungsgemäßen Verfahren kann Kohlendioxid auch in Kombination mit anderen organischen und anorganischen Säuren eingesetzt werden, wobei der Einsatzanteil von Kohlendioxid am Verfahren 1 g, bevorzugt 2 g, besonders bevorzugt 3 g/kg Polymerfeststoff nicht unterschreitet.

Die nach dem erfindungsgemäßen Verfahren hergestellten Polymer-Feststoffe weisen einen Restgehalt an Essigsäure bzw. dem Natrium- oder Kalium-Salz der Essigsäure im Endprodukt von < 1000, bevorzugt < 500, besonders bevorzugt < 100 ppm auf, sofern diese Säure zusätzlich eingesetzt wurde.

Die nach dem erfindungsgemäßen Verfahren hergestellten Polymer-Feststoffe enthalten eine Menge aus der Summe aus Natrium- und Kaliumcarbonat im resultierenden Polymerfeststoff von > 5 bis < 20000 ppm, bevorzugt > 20 bis < 10000 ppm und besonders bevorzugt > 50ppm bis < 5000 ppm.

Bevorzugt erfolgt die Eintragung der geeigneten Mengen von Kohlendioxid im erfindungsgemäßen Verfahren in den Latexstrom in kontinuierlicher Weise. Dabei kann das Kohlendioxid eingedüst, überlagert, mittels statischer und dynamischer Mischaggregate im Gegenstromverfahren und/oder im Gleichstromverfahren oder nach allen technisch bekannten Gas-Flüssigkeitsmischverfahren eingetragen werden. Erfindungsgemäß kann dabei die online Kontrolle der Einmischmenge sowohl volumenmetrisch über den Kohlendioxid Verbrauch, als auch über eine pH-Messung der Polymerdispersion erfolgen.

Bevorzugt wird der Eintrag von Kohlendioxid in die Polymerdispersion so gesteuert, dass die Ausbeute an Kohlendioxid zur Neutralisationsreaktion > 20 %, bevorzugt > 40 %, besonders bevorzugt > 50 % ist.

Der Einmischprozess des erfindungsgemäßen Verfahrens wird bevorzugt bei lokalen Drücken am Eintragungsort von < 80 bar, bevorzugt < 60 bar, besonders bevorzugt < 20 bar durchgeführt.

Die uncompoundierten Polymer-Feststoffe, erhältlich nach den erfindungsgemäßen Verfahren, werden in der Kautschuk und Klebstoffindustrie zur Herstellung von Kautschukvulkanisaten und Klebstoffen verwendet.

Nachstehend wird anhand von Beispielen das erfindungsgemäße Verfahren näher erläutert.

### A Grundrezeptur

Die Herstellung der Latices erfolgte unter Einsatz der folgenden Grundrezeptur. Alle Zahlenangaben, sofern nichts anderes vermerkt, beziehen sich auf Gew.-Teilen pro 100 Gew.-Teile eingesetztes Chloropren.

**Tab. 1: Rezeptur**

| | Beispiel 1 | Beispiel 2* | Beispiel 3 | Beispiel 4* |
|---|---|---|---|---|
| Chloropren | 100 | 100 | 100 | 100 |

| Bestandteile der wässrigen Phase | | | | |
|---|---|---|---|---|
| Entsalztes Wasser | 100 | 100 | 100 | 100 |
| Disproportionierte Harzsäure Na-Salz (Dehydro-, Dihydroabietinsäure Na-Salz) | 3,5 | 3,5 | 3,5 | 3,5 |
| Kondensationsprodukt als Naphthalinsulfonsäure und Formaldehyd (Na-Salz) Natriumhydroxid | 1 | | 1,5 | |
| Aktivator (Formamidinsulfinsäure, 2%ige wässrige Lösung) | 0,36 | 0,36 | | |
| Aktivator (Kaliumperoxodisulfat, 3%ige wässrige Lösung; Natriumdithionit, 2%ige wässrige Lösung) | | | 0,38 | 0,38 |

| Analytik | | | | |
|---|---|---|---|---|
| pH-Wert | 12,7 | 12,7 | 12,6 | 12,6 |
| Feststoffkonzentration (Gew.%) | 31,6 | 31,4 | 31,5 | 31,6 |

Die mit Sternchen gekennzeichneten Beispiele entsprechen der Erfindung.

Die Beispiele 1 und 2 entsprechen der Rezeptur eines CR-Gummitypen, Beispiele 3 und 4 entsprechen der Rezeptur eines schnell kristallisierenden CR-Klebstofftypen.

### B Durchführung der Emulsionspolymerisationen

In einem 4-1-Reaktor wurden die wässrige Phase (1.257g) und die Monomerphase (1.200g) vorgelegt und mit Stickstoff gespült. Nach Aufheizen der Emulsion auf 44°C (Beispiel 1 + 2) bzw. Kühlen auf 10°C (Beispiel 3 + 4) wurde die Polymerisation durch Zugabe einer geringen Menge (20 ml) an Aktivator 2%iger wässriger Formamidinsulfinsäure gestartet und durch kontinuierliche weitere Zugabe der gleichen Lösung bis zu einem Umsatz von 65% durchgeführt. Nach Erreichen des Umsatzes wurde die Polymerisation durch Zugabe von 0,1 Teilen Diethyl-hydroxylamin in Form einer wässrigen Lösung (10%) abgestoppt. Die nicht umgesetzten Monomeren wurden im Vakuum mit Hilfe von Dampf bis zu einem Restmonomergehalt von ca. 800 ppm entfernt.

### C Versuchsserie zur Latexstabilität

**a) Destabilisierung von Beispiel 1 mit Essigsäure**
   200g des hergestellten Latex wurden mit 4,2 ml Essigsäure (20%ig) auf einen pH von 7,2 gebracht, was die sofortige Koagulation zur Folge hatte.
**b) Destabilisierung von Beispiel 1 mit CO₂**
   200g des hergestellten Latex wurden mit 0,7 g CO₂ auf einen pH von 7,2 gebracht und die Stabilität des Latex über einen Zeitraum von einer Woche beobachtet.

Die Ergebnisse sind in Tabelle 2 dargestellt.

**Tab. 2 Versuche zur Latexstabilität**

| | Beispiel 1 | |
|---|---|---|
| | a) destabilisiert mit Essigsäure (20%ig) | b) destabilisiert mit CO₂ |
| nach Zugabe | Koagulation | stabil |
| Tag 1 | - | stabil |
| Tag 2 | - | stabil |
| Tag 3 | - | stabil |
| Tag 4 | - | stabil |
| Tag 5 | - | stabil |
| Tag 6 | - | stabil |
| Tag 7 | - | stabil |

Während die Destabilisierung mit Essigsäure zur sofortigen Koagulation des Latex führt, ist der mit CO₂ destabilisierte Latex über einen Zeitraum von mindestens einer Woche ohne sichtbare Veränderung stabil.

### D Versuchsserie zur Destabilisierung

Die Beispiele 1 - 4 wurden wie in Tabelle 3 dargestellt auf einen pH-Wert von 7,2 eingestellt und anschließend mittels Kälte koaguliert. Dazu wurden je 200 g des Latex in eine Aluminiumschale von 20x30cm gegossen und bei -78°C ausgefroren. Die ausgefrorenen Felle (Polymer-Feststoffe) wurden nach Auftauen mechanisch abgepresst und die so erhaltenen Seren (Abwasser) auf ihren chemischen Sauerstoffbedarf hin analysiert.

Der integrale Gehalt der im Latexserum (Abwasser) enthaltenen löslichen organischen Bestandteile wird durch den CSB-Wert (Chemischer Sauerstoffbedarf) des Latexserums charakterisiert. Der CSB-Wert wird nach DIN 38 409, Teil 41, H 41-1 und H 41-2 bestimmt. Bei der CSB-Bestimmung werden organische Bestandteile mit stark schwefelsaurem Kaliumdichromat in Gegenwart eines Silbersulfat-katalysators quantitativ oxidiert. Anschließend wird die Menge an nicht umgesetztem Kaliumdichromat mit Eisen(II)-Ionen zurücktitriert. Der CSB-Wert wird in der DIN-Norm in der Dimension mg _{Sauerstoff} / Liter Lösung bzw. in der Dimension g _{Sauerstoff} / Liter Lösung angegeben.

**Tabelle 3: Versuche zur Destabilisierung**

| | Beispiel 1 | Beispiel 2* | Beispiel 3 | Beispiel 4* |
|---|---|---|---|---|
| Latex (g) | 1000 | 1000 | 500 | 500 |
| CO₂(g) | | 3,22 | | 1,92 |
| Essigsäure (20%ig) (g) | 20 | | 9,5 | |
| entsalztes Wasser (g) | | 16,4 | | 7,9 |
| Konzentration (%) | 31,2 | 30,8 | 30,61 | 31,8 |
| CSB (gO₂/l Serum) | 14,7 | 9,7 | 22,5 | 8,66 |
| CSB (gO₂/kg CR) | 32,4 | 21,8 | 51,0 | 18,6 |

Die Latices ohne Hilfemulgatoren (Beispiel 2 und 4) zeigen deutlich geringere CSB-Werte als die entsprechenden Latices, die Hilfsemulgatoren enthalten (Beispiel 1 und 3). Das Abwasser aus Beispiel 1 und 3 weist eine deutlich gelbe Verfärbung auf, was auf den Zusatz von Hilfsemulgatoren zurückzuführen ist. Das Abwasser aus Beispiel 2 und 4 ist hingegen nur schwach gelb bis farblos. Der gleiche Trend wurde auch bei den ausgefrorenen erfindungsgemäßen Polymer-Feststoffen beobachtet: die Polychloroprene aus Beispiel 1 und 3 zeigen eine gelbliche Verfärbung, während die Polychloroprene aus Beispiel 2 und 4 fast farblos sind.

Das erfindungsgemäße Verfahren ermöglicht somit den Verzicht auf ein kostenintensives Aufbereitungsverfahren des Abwassers und weiterhin die Herstellung farbloser Polychloroprene, was insbesondere für die Klebstoffproduktion einen erheblichen Vorteil bedeutet.

## Patentansprüche

1. Verfahren zur Herstellung von hilfsemulgatorfreien Polymerfeststoffen ausgehend von Polymerlatices (-dispersion), **dadurch gekennzeichnet, dass** eine Polymerdispersion mit einem Ausgangs-pH-Wert größer 9 durch Zugabe von gasförmigem Kohlendioxid auf einen pH-Wert von 6 bis 9 eingestellt wird und die Polymerdispersion im Anschluss durch Scherung und/oder Ausfrieren koaguliert wird.

2. Verfahren nach Anspruch 1, **dadurch gekennzeichnet, dass** die pH-Wert-Einstellung zwischen 7 und 8 liegt.

3. Verfahren nach Anspruch 2, **dadurch gekennzeichnet, dass** die Polymerdispersion eine anionisch-stabilisierte Polychloroprendispersion mit einem Anteil an polymerisiertem Chloropren am Feststoff der Gesamtdispersion von > 50 % ist.

4. Verfahren nach Ansprüchen 2 oder 3, **dadurch gekennzeichnet, dass** die Polymer-Dispersion mittels einer kontinuierlichen Polymerisation von Chloropren ohne Zusatz von Hilfsemulgatoren hergestellt wird.

5. Verfahren nach Anspruch 4, **dadurch gekennzeichnet, dass** die Eintragung der geeigneten Mengen von Kohlendioxid in den Latexstrom in kontinuierlicher Weise erfolgt.

6. Verfahren nach Anspruch 5, **dadurch gekennzeichnet, dass** der Eintrag von Kohlendioxid in die Polymerdispersion so gesteuert wird, dass die: Ausbeute an Kohlendioxid zur Neutralisationsreaktion > 20 %, bevorzugt >40 %, besonders bevorzugt >50 % beträgt.

7. Verfahren nach Anspruch 6, **dadurch gekennzeichnet, dass** der Eintrag bei lokalen Drücken am Eintragungsort von < 80 bar, bevorzugt <60 bar, besonders bevorzugt <20 bar durchgeführt wird.

## Claims

1. Method for producing polymeric solids that are free of auxiliary emulsifiers starting from polymer latices (dispersion), **characterised in that** a polymer dispersion having a starting pH value greater than 9 is adjusted to a pH value of from 6 to 9 by addition of gaseous carbon dioxide and the polymer dispersion is subsequently coagulated by shear and/or freezing out.

2. Method according to claim 1, **characterised in that** the pH value adjustment is between 7 and 8.

3. Method according to claim 2, **characterised in that** the polymer dispersion is an anionically stabilised polychloroprene dispersion in which the proportion of polymerised chloroprene in the solid matter of the dispersion as a whole is > 50%.

4. Method according to claim 2 or 3, **characterised in that** the polymer dispersion is prepared by means of a continuous polymerisation of chloroprene without the addition of auxiliary emulsifiers.

5. Method according to claim 4, **characterised in that** the introduction of the suitable amounts of carbon dioxide into the latex stream is carried out continuously.

6. Method according to claim 5, **characterised in that** the introduction of carbon dioxide into the polymer dispersion is so controlled that the yield of carbon dioxide for the neutralisation reaction is > 20%, preferably > 40%, particularly preferably >50%.

7. Method according to claim 6, **characterised in that** the introduction is carried out at local pressures at the point of introduction of < 80 bar, preferably < 60 bar, particularly preferably < 20 bar.

## Revendications

1. Procédé pour la préparation de solides polymères exempts d'émulsifiants auxiliaires, partant de latex (dispersions) de polymère, **caractérisé en ce qu'**on règle une dispersion de polymère présentant une valeur de pH de départ supérieure à 9, par addition de dioxyde de carbone gazeux, à un pH de 6 à 9 et la dispersion de polymère est ensuite coagulée par cisaillement et/ou congélation.

2. Procédé selon la revendication 1, **caractérisé en ce que** le réglage de la valeur du pH est situé entre 7 et 8.

3. Procédé selon la revendication 2, **caractérisé en ce que** la dispersion de polymère est une dispersion de polychloroprène stabilisée anioniquement présentant une proportion de chloroprène polymérisé par rapport aux solides de la dispersion totale > 50%.

4. Procédé selon les revendications 2 ou 3, **caractérisé en ce que** la dispersion de polymère est préparée au moyen d'une polymérisation continue de chloroprène sans addition d'émulsifiants auxiliaires.

5. Procédé selon la revendication 4, **caractérisé en ce que** l'introduction des quantités appropriées de dioxyde de carbone dans le flux de latex a lieu de manière continue.

6. Procédé selon la revendication 5, **caractérisé en ce que** l'introduction de dioxyde de carbone dans la dispersion de polymère est réglée de manière telle que le rendement en dioxyde de carbone par rapport à la réaction de neutralisation est > 20%, de préférence > 40%, de manière particulièrement préférée > 50%.

7. Procédé selon la revendication 6, **caractérisé en ce que** l'introduction est réalisée à des pressions locales au site d'introduction < 80 bars, de préférence < 60 bars, de manière particulièrement préférée < 20 bars.
